(19) Europäisches Patentamt
European Patent Office
Office européen des brevets

(11) **EP 4 557 579 A1**

(12) **EUROPEAN PATENT APPLICATION**
published in accordance with Art. 153(4) EPC

(43) Date of publication:
**21.05.2025 Bulletin 2025/21**

(21) Application number: **22951143.1**

(22) Date of filing: **14.07.2022**

(51) International Patent Classification (IPC):
**H02K 1/278** *(2022.01)*  **H02K 1/2795** *(2022.01)*

(52) Cooperative Patent Classification (CPC):
**H02K 1/278; H02K 1/2795**

(86) International application number:
**PCT/JP2022/027691**

(87) International publication number:
**WO 2024/013929 (18.01.2024 Gazette 2024/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **NISHIMURA Yuki**
**Tokyo 100-8310 (JP)**
• **TOTOKI Eigo**
**Tokyo 100-8310 (JP)**
• **NAKAMURA Yuichiro**
**Tokyo 100-8310 (JP)**
• **FUJIKURA Shohei**
**Tokyo 100-8310 (JP)**

(74) Representative: **Hoffmann Eitle
Patent- und Rechtsanwälte PartmbB
Arabellastraße 30
81925 München (DE)**

(54) **PERMANENT MAGNET SYNCHRONOUS ELECTRIC MOTOR**

(57) A permanent magnet synchronous electric motor includes a stator, a rotor, and a plurality of permanent magnets. Each of the plurality of permanent magnets has a first magnet end and a second magnet end in a circumferential direction. A recessed portion of each of the plurality of permanent magnets has a first recessed-portion end and a second recessed-portion end in the circumferential direction. L1 ≠ L2 is satisfied provided that a distance between the first magnet end and the first recessed-portion end is L1 and a distance between the second magnet end and the second recessed-portion end is L2.

FIG. 2A

**Description**

Technical Field

The present disclosure relates to a permanent magnet synchronous electric motor.

Background Art

Conventionally, permanent magnet synchronous electric motors have been used in industrial applications such as machine tools, in in-vehicle applications used for electric vehicles or the like, and in compressor applications such as air conditioners.

In a permanent magnet synchronous electric motor, it is known that, in order for an electric motor to output a torque, a terminal voltage generated by the electric motor needs to be equal to or lower than an input voltage. For example, a terminal voltage Vt generated by a permanent magnet synchronous electric motor is expressed as follows using the dq-axis theory.

$$Vd = RId + \omega LqIq$$

$$Vq = RIq + \omega LdId + \omega \Phi m$$

$$Vt = \sqrt{(Vd^2 + Vq^2)}$$

Here, Vd is a d-axis voltage. Vq is a q-axis voltage. Ld is a d-axis inductance. Lq is a q-axis inductance. R is resistance. Id is a d-axis current. Iq is a q-axis current. $\omega$ is an angular velocity. $\Phi m$ is a magnet magnetic flux. $\omega \Phi m$ is an induced voltage. $\omega Ld$, $\omega Lq$, and $\omega \Phi m$ increase in proportion to a rotation speed or velocity. Therefore, in a state in which an electric motor rotates at a high speed or the electric motor is driven at a high speed, the terminal voltage Vt increases.

As a control technology for keeping the terminal voltage Vt equal to or lower than an input voltage Vi, a flux-weakening control that inputs a negative d-axis current Id to the electric motor is known. According to such a flux-weakening control, it is possible to control the terminal voltage Vt to be equal to or lower than the input voltage Vi even when the electric motor rotates at a high speed or the electric motor is driven at a high speed.

In such a flux-weakening control, an amount of the induced voltage $\omega \Phi m$ generated is reduced by applying the negative d-axis current Id to the electric motor, thereby preventing the terminal voltage Vt from becoming saturated during high-speed rotation.

However, in a case in which the d-axis inductance Ld is small, the function of suppressing the terminal voltage Vt by the flux-weakening control cannot be effectively obtained. Therefore, it is necessary to apply a larger amount of the d-axis current Id to the electric motor than is needed.

For example, the following relationship exists between the d-axis current Id, the q-axis current Iq, and an input current Ia.

$$Ia = \sqrt{(Id^2 + Iq^2)}$$

Therefore, an increase in the d-axis current Id causes a decrease in the q-axis current Iq.

Generally, a torque T generated by a surface magnet type permanent magnet synchronous electric motor is expressed as follows, in which pn is the number of pole pairs.

$$T = pn\Phi mIq$$

In order to generate the torque T, the q-axis current Iq is required. Therefore, a decrease in the q-axis current Iq causes a torque of the electric motor to decrease. Therefore, in order to output a large torque during high-speed rotation or high-speed driving, it is necessary to perform the effective flux-weakening control with a small amount of the d-axis current Id.

In order to perform such a flux-weakening control, Patent Document 1 discloses an effective flux-weakening control with a small amount of the d-axis current Id by increasing the d-axis inductance Ld.

In Patent Document 1, protrusions protruding in a radial direction from a rotor core are formed to be fitted into a plurality of permanent magnets disposed on a surface of the rotor core. Therefore, the d-axis inductance Ld is increased to effectively function the flux-weakening control, and a torque output of the electric motor during high-speed rotation is improved.

Citation List

Patent Documents

Patent Document 1: Japanese Unexamined Patent Application, First Publication No. 2009-131070

Summary of Invention

Problem to be Solved by the Invention

However, in the above-described Citation List, a circumferential position of the protruding portion of the rotor core intended to increase the d-axis inductance Ld is positioned at a center of the magnetic pole. Also, a shape of the protruding portion is mirror symmetrical with respect to the center of the magnetic pole.

In a structure having such a protruding portion, in a case in which a stage skew structure for reducing a torque ripple is applied to the rotor, displacement occurs in a d-axis position of each stage. Therefore, it is difficult to effectively increase the d-axis inductance Ld.

The present disclosure has been made to solve the above-described problems, and an objective of the present disclosure is to provide a permanent magnet synchronous electric motor capable of increasing a d-axis inductance Ld to perform an efficient flux-weakening control.

Means to Solve the Problem

A permanent magnet synchronous electric motor according to the present disclosure includes a stator, a rotor, and a plurality of permanent magnets. The rotor includes a rotor core constituted by an electrical steel sheet and having one or more protruding portions protruding in a radial direction toward the stator, and a rotating shaft fixed to the rotor core. The rotor is rotatably disposed with respect to the stator. Each of **the** plurality of permanent magnets includes an arc-shaped stator-facing surface facing the stator with a gap therebetween, a rotor-core-fixing surface positioned on a side opposite to the stator-facing surface and fixed to an outer circumferential surface of the rotor core, and a recessed portion connected to a part of the rotor-core-fixing surface and into which the protruding portion is fitted. The plurality of permanent magnets are aligned in a circumferential direction of the rotor. Polarities of the stator-facing surfaces of two permanent magnets adjacent to each other in the circumferential direction among the plurality of permanent magnets are different from each other. In the circumferential direction, each of the plurality of permanent magnets has a first magnet end connected to the rotor-core-fixing surface and a second magnet end connected to the rotor-core-fixing surface and positioned on a side opposite to the first magnet end. In the circumferential direction, the recessed portion of each of the plurality of permanent magnets has, a first recessed-portion end connected to the rotor-core-fixing surface and a second recessed-portion end connected to the rotor-core-fixing surface and positioned on a side opposite to the first recessed-portion end. The rotor-core-fixing surface includes a first region positioned between the first magnet end and the first recessed-portion end and a second region positioned between the second magnet end and the second recessed-portion end. The recessed portion is positioned between the first region and the second region. $L1 \neq L2$ is satisfied provided that a distance between the first magnet end and the first recessed-portion end in the first region is L1, and a distance between the second magnet end and the second recessed-portion end in the second region is L2.

Effects of the Invention

According to the permanent magnet synchronous electric motor according to the present disclosure, the d-axis inductance Ld can be increased, and an efficient flux-weakening control can be performed. Therefore, it is possible to improve a torque output of the permanent magnet synchronous electric motor during high-speed rotation.

Brief Description of Drawings

[FIG. 1A] A view showing a permanent magnet synchronous electric motor according to a first embodiment and being a cross-sectional view seen in an axial direction.
[FIG. 1B] A view showing the permanent magnet synchronous electric motor according to the first embodiment and being a cross-sectional view seen in the axial direction.
[FIG. 2A] An enlarged view showing a region near a permanent magnet constituting the permanent magnet synchronous electric motor according to the first embodiment and being a cross-sectional view seen in the axial direction.
[FIG. 2B] A partial cross-sectional view in the axial direction showing a state in which a permanent magnet shown in FIG. 1A and a permanent magnet shown in FIG. 1B are overlapped in a two-stage skew structure constituting the permanent magnet synchronous electric motor according to the first embodiment.
[FIG. 3] An enlarged view showing a region near a permanent magnet constituting a conventional permanent magnet synchronous electric motor and being a cross-sectional view seen in the axial direction.
[FIG. 4] A diagram showing a comparison result in which the permanent magnet synchronous electric motor according to the first embodiment and the conventional permanent magnet synchronous electric motor are compared regarding a d-axis inductance Ld.
[FIG. 5] An enlarged view showing a region near a permanent magnet constituting a modified example of the permanent magnet synchronous electric motor according to the first embodiment and being a cross-sectional view seen in the axial direction.
[FIG. 6] An enlarged view showing a region near a permanent magnet constituting a modified example of the permanent magnet synchronous electric motor according to the first embodiment and being a cross-sectional view seen in the axial direction.
[FIG. 7A] An enlarged view showing a region near a permanent magnet constituting a permanent magnet synchronous electric motor according to a second embodiment and being a cross-sectional view seen in the axial direction.
[FIG. 7B] An enlarged view showing a region near a permanent magnet constituting a modified example of the permanent magnet synchronous electric motor according to the second embodiment and being a cross-sectional view seen in the axial direction.

[FIG. 8] A diagram showing a comparison result in which the permanent magnet synchronous electric motor according to the first embodiment and the conventional permanent magnet synchronous electric motor are compared regarding the d-axis inductance Ld and an induced voltage decrease rate after demagnetization.

[FIG. 9A] A diagram showing a demagnetization factor distribution of the conventional permanent magnet synchronous electric motor.

[FIG. 9B] A diagram showing a demagnetization factor distribution of the permanent magnet synchronous electric motor according to the first embodiment.

[FIG. 10] A diagram showing a comparison result in which the permanent magnet synchronous electric motor according to the first embodiment, the permanent magnet synchronous electric motor according to the second embodiment, and the permanent magnet synchronous electric motor according to the modified example of the second embodiment are compared regarding the induced voltage decrease rate after demagnetization.

[FIG. 11A] A diagram showing a demagnetization factor distribution of the permanent magnet synchronous electric motor according to the first embodiment.

[FIG. 11B] A diagram showing a demagnetization factor distribution of the permanent magnet synchronous electric motor according to the second embodiment.

[FIG. 11C] A diagram showing a demagnetization factor distribution of the permanent magnet synchronous electric motor according to the modified example of the second embodiment.

[FIG. 12A] An enlarged view showing a region near a permanent magnet constituting a modified example of the permanent magnet synchronous electric motor according to the second embodiment and being a cross-sectional view seen in the axial direction.

[FIG. 12B] An enlarged view showing a region near the permanent magnet constituting the modified example of the permanent magnet synchronous electric motor according to the second embodiment and being a cross-sectional view seen in the axial direction.

[FIG. 13] A diagram showing a comparison result in which the permanent magnet synchronous electric motor according to the first embodiment and the modified example of the permanent magnet synchronous electric motor according to the second embodiment are compared regarding the induced voltage decrease rate after demagnetization.

[FIG. 14A] A diagram showing a demagnetization factor distribution of a modified example of the permanent magnet synchronous electric motor according to the first embodiment.

[FIG. 14B] A diagram showing a demagnetization factor distribution of a modified example of the permanent magnet synchronous electric motor according to the second embodiment.

[FIG. 14C] A diagram showing a demagnetization factor distribution of a modified example of the permanent magnet synchronous electric motor according to the second embodiment.

[FIG. 15] A perspective view showing a rotor constituting a permanent magnet synchronous electric motor according to a third embodiment.

[FIG. 16] A perspective view showing a rotor core constituting the permanent magnet synchronous electric motor according to the third embodiment.

[FIG. 17] A diagram showing a comparison result in which the permanent magnet synchronous electric motor according to the third embodiment and the conventional permanent magnet synchronous electric motor are compared regarding a torque ripple.

[FIG. 18] A perspective view showing a rotor constituting a permanent magnet synchronous electric motor according to a fourth embodiment.

[FIG. 19] A perspective view showing a rotor core constituting the permanent magnet synchronous electric motor according to the fourth embodiment.

[FIG. 20] A diagram showing a comparison result in which the permanent magnet synchronous electric motor according to the fourth embodiment and the conventional permanent magnet synchronous electric motor are compared regarding a torque ripple.

[FIG. 21] A diagram showing a comparison result in which the permanent magnet synchronous electric motor according to the fourth embodiment and the conventional permanent magnet synchronous electric motor are compared regarding the d-axis inductance Ld.

Description of Embodiments

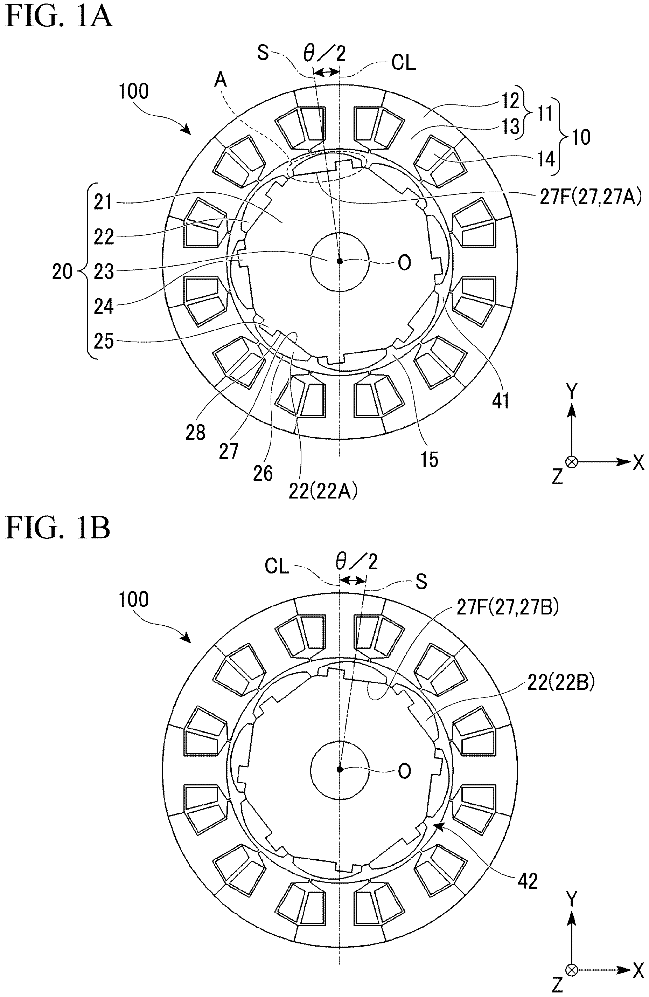

A permanent magnet synchronous electric motor according to embodiments will be described with reference to FIGS. 1A to 21.

In the description of the embodiments, the permanent magnet synchronous electric motor may be simply referred to as an electric motor.

In FIGS. 1 to 21, components the same as or similar to each other will be denoted by the same reference signs.

The drawings show the embodiments schematically or conceptually. A relationship between a thickness and a width of each portion, a size ratio between portions, and the like shown in the drawings are not necessarily the same as those of the actual members.

Configurations that are not related to features of the present disclosure may be omitted in the drawings.

In the drawing used to explain the embodiments, an X direction, a Y direction, and a Z direction corresponding to a three-dimensional orthogonal coordinate system are shown (reference signs X, Y, and Z). The Z direction coincides with an axial direction of the permanent magnet synchronous electric motor. In other words, the Z direction coincides with the axial direction in which a rotating shaft positioned at an axial center of a rotor extends. The Z direction can also be referred to as a vertical direction in a two-stage skew structure. The X direction and the Y direction intersect (for example, are orthogonal to) the Z direction. The X direction and the Y direction intersect (for example, are orthogonal to) each other.

The terms "circumferential direction" and "radial direction" used in the following description correspond to a "circumferential direction" and a "radial direction" in a stator or rotor constituting the permanent magnet synchronous electric motor.

The term "circumferential direction" corresponds to a rotation direction of the rotor. In other words, in a cross-sectional view in the axial direction, a circumferential direction around the rotating shaft of the rotor is the circumferential direction.

The term "radial direction" means a direction of a radius of the rotor. For example, the term "radially outward" means a direction from a center toward an outer circumferential portion of the rotor in the radial direction. The term "radially inward" means a direction from the outer circumferential portion toward the center of the rotor in the radial direction.

First Embodiment

An electric motor according to a first embodiment will be described.

FIGS. 1A and 1B are cross-sectional views showing a permanent magnet synchronous electric motor 100 according to the first embodiment. The permanent magnet synchronous electric motor 100 has a two-stage skew structure. FIG. 1A shows a cross section of a structure of one stage of the two-stage skew structure. FIG. 1B shows a cross section of a structure of the other stage of the two-stage skew structure. For example, FIG. 1A shows a structure of an upper stage of the two-stage skew structure. Also, FIG. 1B shows a structure of a lower stage of the two-stage skew structure.

In FIGS. 1A and 1B, reference sign CL indicates a center line of the permanent magnet synchronous electric motor 100. Reference sign O indicates an axial center of a rotating shaft 23 to be described later. Positions of the center line CL and the axial center O are the same in FIGS. 1A and 1B. In other words, the center line CL corresponds to a d-axis of the permanent magnet synchronous electric motor 100. In the following description, a position on the d-axis may be referred to as a d-axis position d1. Reference sign S denotes a magnet center line extending radially outward from the axial center O and passing through a circumferential center point of a permanent magnet 22 to be described later. That is, the magnet center line S passes through a circumferential center point C of a stator-facing surface 26 to be described later.

Regarding a structure of the permanent magnet synchronous electric motor 100 according to the first embodiment, a skew structure on the upper stage side and a skew structure on the lower stage side are displaced in the circumferential direction by a skew angle θ. A shape of the skew structure shown in FIG. 1A is similar to a shape of the skew structure shown in FIG. 1B. Therefore, the structure of the permanent magnet synchronous electric motor 100 will be described with reference to FIG. 1A. The skew angle θ will be described later.

<Permanent magnet synchronous electric motor>

As shown in FIG. 1A, the permanent magnet synchronous electric motor 100 includes a stator 10 and a rotor 20. In the two-stage skew structure, circumferential centers of the magnets in the stages aligned in the Z direction are displaced in the circumferential direction by the skew angle θ from a center of the rotating shaft 23 of the rotor 20. Therefore, the permanent magnet synchronous electric motor 100 has a so-called stage skew structure. Each of a plurality of stages constituting the stage skew structure may be referred to as "each stage". In a structure in which the number of stages is two, that is, in describing the two-stage skew structure, the skew structure on the upper stage side may be simply referred to as an "upper stage" and the skew structure on the lower stage side may be simply referred to as a "lower stage".

Furthermore, in the present specification, the terms "upper stage" and the "lower stage" are used for simplifying the description and do not define a vertical direction of the permanent magnet synchronous electric motor 100. For example, the skew structure on the upper stage side may also be referred to as a first skew structure, and the skew structure on the lower stage side may also be referred to as a second skew structure. In this case, the first skew structure and the second skew structure are aligned in the Z direction.

<Stator>

The stator 10 is disposed to surround an outer circumference of the rotor 20 via a gap 15 serving as a magnetic gap. The stator 10 includes a stator core 11 and a winding 14. The stator core 11 has a core back 12 formed in an annular shape in the circumferential direction, and a plurality of teeth 13 protruding radially inward from the core back 12. The winding 14 is wound around each of the plurality of teeth 13. In the following description, the winding 14 wound around each of the teeth 13 may be referred to as a coil portion. In the example shown in FIG. 1A, one coil portion is provided for one of the teeth 13.

In the configuration shown in FIG. 1A, the number of teeth 13 is twelve. The number of teeth 13 is not limited to twelve and may be determined as appropriate according to a design of the permanent magnet synchronous electric motor 100.

In the first embodiment, the core back 12 is constituted by connecting a plurality of core blocks, each of which is formed in an arc shape, in an annular shape. A structure of the core back 12 is not limited to the structure shown in FIG. 1A. The core back 12 may be constituted by integrally forming a plurality of core blocks. Also, the core back 12 and the teeth 13 may be separated.

<Rotor>

The rotor 20 has a rotor core 21, the rotating shaft 23, and a plurality of permanent magnets 22.

The rotor core 21 is constituted by stacking a plurality of electrical steel sheets in the Z direction. The electrical steel sheet may also be referred to as, for example, a core sheet. The rotating shaft 23 is fixed to the rotor core 21 to penetrate the rotor core 21 in the Z direction. The rotating shaft 23 may also be referred to as a shaft. Such a rotor 20 is rotatably disposed with respect to the stator 10 inside the permanent magnet synchronous electric motor 100.

The rotor core 21 has a protruding portion 24 that protrudes in the radial direction. The protruding portion 24 protrudes radially outward toward the stator 10. In the first embodiment, a shape of the protruding portion 24 is rectangular. In the first embodiment, the number of protruding portions 24 is eight, corresponding to the number of the plurality of permanent magnets 22. The number of protruding portions 24 may be one or more.

<Permanent magnet>

The plurality of permanent magnets 22 are disposed on an outer circumferential surface 28 of the rotor core 21 in the circumferential direction. The permanent magnet synchronous electric motor 100 having such a plurality of permanent magnets 22 is an example of a surface magnet type motor (SPM).

The plurality of permanent magnets 22 each have a stator-facing surface 26 and a rotor-core-fixing surface 27. The stator-facing surface 26 faces the stator 10 with the gap 15 therebetween. The stator-facing surface 26 has an arc shape. The rotor-core-fixing surface 27 is positioned on a side opposite to the stator-facing surface 26. The rotor-core-fixing surface 27 is fixed to the outer circumferential surface 28 of the rotor core 21. A recessed portion 25 is provided at a part of the rotor-core-fixing surface 27. In other words, the recessed portion 25 is connected to a part of the rotor-core-fixing surface 27. The recessed portion 25 fits to the protruding portion 24. In the first embodiment, a shape of the recessed portion 25 is rectangular similarly to the shape of the protruding portion 24.

As will be described later, the rotor-core-fixing surface 27 has a first region 27F and a second region 27S. The first region 27F and the second region 27S are each fixed to the outer circumferential surface 28 of the rotor core 21. The recessed portion 25 is positioned between the first region 27F and the second region 27S.

The plurality of permanent magnets 22 are aligned in a circumferential direction of the rotor 20. Polarities of the stator-facing surfaces 26 of two permanent magnets 22 adjacent to each other in the circumferential direction among the plurality of permanent magnets 22 are different from each other. For example, the plurality of permanent magnets 22 are disposed with their magnetization directions different from each other so that if a polarity of the stator-facing surface 26 of one of two adjacent permanent magnets 22 in the circumferential direction is an N pole, a polarity of the stator-facing surface 26 of the other is an S pole.

In the permanent magnet synchronous electric motor 100 shown in FIG. 1A, the number of teeth 13 is twelve, the number of coil portions constituted by the windings 14 is twelve, and the number of permanent magnets is eight. That is, FIG. 1A shows a so-called 8-pole, 12-slot permanent magnet synchronous electric motor. A combination of the number of plurality of permanent magnets 22, teeth 13, and coil portions is not limited thereto. Also, in the example shown in FIG. 1A, the number of teeth 13 and the number of coil portions are the same, but the number of teeth 13 and the number of coil portions may be different.

As shown in FIG. 1A, a central position of each of the plurality of permanent magnets 22 in the circumferential direction is displaced in the circumferential direction as it goes in the axial direction. When the skew angle between the upper-stage permanent magnet 22 and the lower-stage permanent magnet 22 in the stage skew structure is $\theta$, the recessed portions 25 are displaced in different directions by a displacement amount $\theta$ of the permanent magnets 22 shown in the same cross-sectional view.

In the stage skew structure, the plurality of permanent magnets 22 include a first magnet group 41 and a second magnet group 42 adjacent to each other in the Z direction. FIG. 1A shows the first magnet group 41. FIG. 1B shows the second magnet group 42. Between the first magnet group 41 and the second magnet group 42, the rotor 20 has the stage skew structure.

In the following description, each of the plurality of permanent magnets 22 constituting the first magnet group 41 may be referred to as a first permanent magnet 22A. Each of the plurality of permanent magnets 22 constituting the second magnet group 42 may be referred to as a second permanent magnet 22B.

In other words, the first permanent magnet 22A constituting the first magnet group 41 is disposed to be displaced from the center line CL by a displacement amount of $\theta/2$ in a counterclockwise direction in the circumferential direction. That is, in the counterclockwise direction, the magnet center line S shown in FIG. 1A is displaced from the center line CL by the displacement amount of θ/2.

In other words, the first permanent magnet 22A constituting the first magnet group 41 is displaced by θ/2 with respect to the d-axis of the permanent magnet synchronous electric motor 100 in the counterclockwise direction in the circumferential direction.

The second permanent magnet 22B constituting the second magnet group 42 is disposed to be displaced from the center line CL by a displacement amount of θ/2 in a clockwise direction in the circumferential direction. That is, in the clockwise direction, the magnet center line S shown in FIG. 1B is displaced from the center line CL by the displacement amount of θ/2.

That is, the second permanent magnet 22B constituting the second magnet group 42 is displaced by θ/2 with respect to the d-axis of the permanent magnet synchronous electric motor 100 in the clockwise direction in the circumferential direction.

Focusing on the second magnet group 42 and the first magnet group 41, the second permanent magnet 22B constituting the second magnet group 42 is displaced in the circumferential direction by a displacement amount θ (skew angle θ) with respect to the first permanent magnet 22A constituting the first magnet group 41.

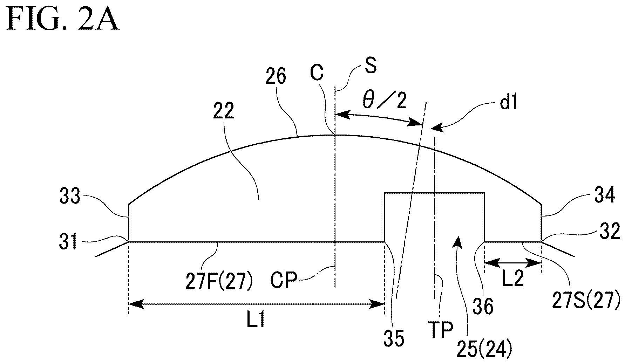

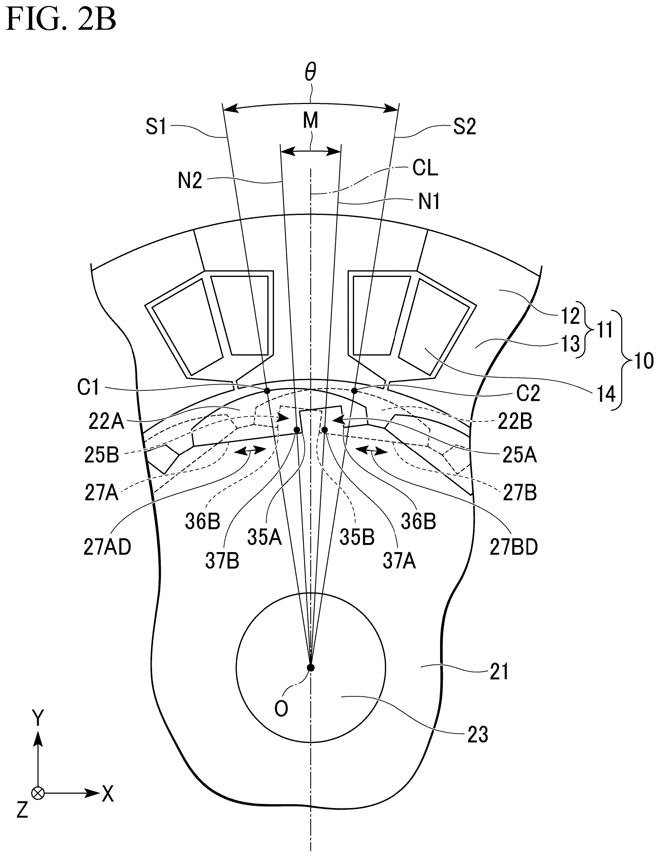

The plurality of first permanent magnets 22A constituting the first magnet group 41 and the plurality of second permanent magnets 22B constituting the second magnet group 42 will be specifically described with reference to FIGS. 1A, 1B, 2A, and 2B.

The permanent magnet 22 shown in FIG. 2A corresponds to the first permanent magnet 22A shown in FIG. 1. However, if the permanent magnet shown in FIG. 2A is reversed in a left-right direction, the permanent magnet 22 shown in FIG. 2A becomes the second permanent magnet 22B. Therefore, description of the second permanent magnet 22B is omitted in FIG. 2A.

The recessed portion 25 that engages with the protruding portion 24 will be described in detail with reference to FIG. 2A.

FIG. 2A is an enlarged view showing a region near the permanent magnet 22, and is a cross-sectional view seen in the axial direction. FIG. 2A is an enlarged view showing the portion surrounded by the broken line portion A in FIG. 1A.

As shown in FIG. 2A, the magnet center line S extending radially outward from the axial center O of the rotating shaft 23 and passing through the circumferential center point C of the permanent magnet 22 is defined as a circumferential center position CP of the permanent magnet 22. Here, the center point C is positioned at a center in a circumferential direction of the stator-facing surface 26 of the permanent magnet 22. The center point C is positioned at a portion of the stator-facing surface 26 having an arc shape closest to the teeth 13. A line passing through a center of the protruding portion 24 and parallel to the magnet center line S is defined as a protruding portion center position TP. The protruding portion center position TP can also be referred to as a center of the protruding portion 24. The protruding portion center position TP is positioned at a center between a first recessed-portion end 35 and a second recessed-portion end 36.

The plurality of permanent magnets 22 each have, in the circumferential direction, a first magnet end 31 connected to the rotor-core-fixing surface 27 and a second magnet end 32 connected to the rotor-core-fixing surface 27. The second magnet end 32 is positioned on a side opposite to the first magnet end 31 with respect to the circumferential center position CP. The permanent magnet 22 has a first side surface 33 and a second side surface 34 positioned opposite to each other in the circumferential direction. The first magnet end 31 corresponds to a portion at which the first side surface 33 and the rotor-core-fixing surface 27 are connected. The second magnet end 32 corresponds to a portion at which the second side surface 34 and the rotor-core-fixing surface 27 are connected.

The recessed portion 25 of each of the plurality of permanent magnets 22 has, in the circumferential direction, the first recessed-portion end 35 connected to the rotor-core-fixing surface 27, and the second recessed-portion end 36 connected to the rotor-core-fixing surface 27 and positioned on a side opposite to the first recessed-portion end 35.

The first region 27F of the rotor-core-fixing surface 27 is positioned between the first magnet end 31 and the first recessed-portion end 35. The second region 27S of the rotor-core-fixing surface 27 is positioned between the second magnet end 32 and the second recessed-portion end 36.

In other words, the first region 27F is a surface formed between the first magnet end 31 and the first recessed-portion end 35. The second region 27S is a surface formed between the second magnet end 32 and the second recessed-portion end 36. In other words, the first region 27F and the second region 27S are positioned on both sides of the recessed portion 25.

When a distance between the first magnet end 31 and the first recessed-portion end 35 in the first region 27F is L1 and a distance between the second magnet end 32 and the second recessed-portion end 36 in the second region 27S is L2, L1 ≠ L2 is satisfied. In the stage skew structure, each of the plurality of permanent magnets 22 satisfies L1 ≠ L2 and satisfies L1 > L2.

Furthermore, the magnet center line S intersects the first region 27F. In other words, the magnet center line S intersects a line connecting the first magnet end 31 and the first recessed-portion end 35.

Specifically, in the skew structure on the upper stage side shown in FIG. 1A, the magnet center line S, which is displaced from the center line CL by a displacement amount of θ/2 in the counterclockwise direction, intersects the first region 27F of the permanent magnet 22.

In the skew structure on the lower stage side shown in FIG. 1B, the magnet center line S, which is displaced from the center line CL by a displacement amount of θ/2 in the clockwise direction, intersects the first region 27F of the permanent magnet 22.

Next, a disposition of the first permanent magnet 22A and the second permanent magnet 22B in the two-stage skew structure constituting the permanent magnet synchronous electric motor will be described with reference to FIG. 2B. FIG. 2B is a partial cross-sectional view in the Z direction showing a state in which the first permanent magnet 22A and the second permanent magnet 22B are overlapped.

In FIG. 2B, the first permanent magnet 22A is shown by a solid line, and the second permanent magnet 22B is shown by a dotted line.

The first permanent magnet 22A has a first rotor-core-fixing surface 27A fixed to the outer circumferential surface 28 of the rotor core 21. The first rotor-core-fixing surface 27A is a surface corresponding to the rotor-core-fixing surface 27. Therefore, as shown in FIG. 2A, the first rotor-core-fixing surface 27A includes the first region 27F having a distance L1 and the first recessed-portion end 35, and the second region 27S having a distance L2 and the second recessed-portion end 36.

The second permanent magnet 22B has a second rotor-core-fixing surface 27B fixed to the outer circumferential surface 28 of the rotor core 21. The second rotor-core-fixing surface 27B is a surface corresponding to the rotor-core-fixing surface 27. Therefore, as shown in FIG. 2A, the second rotor-core-fixing surface 27B includes the first region 27F having the distance L1 and the first recessed-portion end 35, and the second region 27S having the distance L2 and the second recessed-portion end 36.

A circumferential center point of the first permanent magnet 22A is defined as a first center point C1. In other words, the first center point C1 corresponds to a circumferential center point of the stator-facing surface 26 of the first permanent magnet 22A.

A circumferential center point of the second permanent magnet 22B is defined as a second center point C2. In other words, the second center point C2 corresponds to a circumferential center point of the stator-facing surface 26 of the second permanent magnet 22B.

A line extending radially outward from the axial center O of the rotating shaft 23, passing through the first center point C1, and intersecting the first region 27F of the first permanent magnet 22A is defined as a first magnet center line S1.

A line extending radially outward from the axial center O of the rotating shaft 23, passing through the second center point C2, and intersecting the first region 27F of the second permanent magnet 22B is defined as a second magnet center line S2.

A midpoint between the first recessed-portion end 35 and the second recessed-portion end 36 of the first permanent magnet 22A in a direction 27AD parallel to the first rotor-core-fixing surface 27A is defined as a first midpoint 37A.

A midpoint between the first recessed-portion end 35 and the second recessed-portion end 36 of the second permanent magnet 22B in a direction 27BD parallel to the second rotor-core-fixing surface 27B is defined as a second midpoint 37B.

A line extending radially outward from the axial center O of the rotating shaft 23 and passing through the first midpoint 37A is defined as a first recessed portion center line N1.

A line extending radially outward from the axial center O of the rotating shaft 23 and passing through the second midpoint 37B is defined as a second recessed portion center line N2.

In the above-described definitions, an angle between the first magnet center line S1 and the second magnet center line S2 is the skew angle θ. Also, an angle between the first recessed portion center line N1 and the second recessed portion center line N2 is an inter-recessed portion center angle M. In this case, the inter-recessed portion center angle M is smaller than the skew angle θ. Also, L1 ≠ L2 is satisfied, and L1 > L2 is satisfied. A value obtained by dividing L1 by L2, that is, a value of L1/L2, is within a range of 1.0 < L1/L2 < 1.6.

<Effects>

Next, effects obtained by the first embodiment will be described while comparing a conventional permanent magnet synchronous electric motor and the permanent magnet synchronous electric motor 100 according to the first embodiment.

<Conventional permanent magnet synchronous electric motor>

First, a conventional permanent magnet synchronous electric motor will be described.

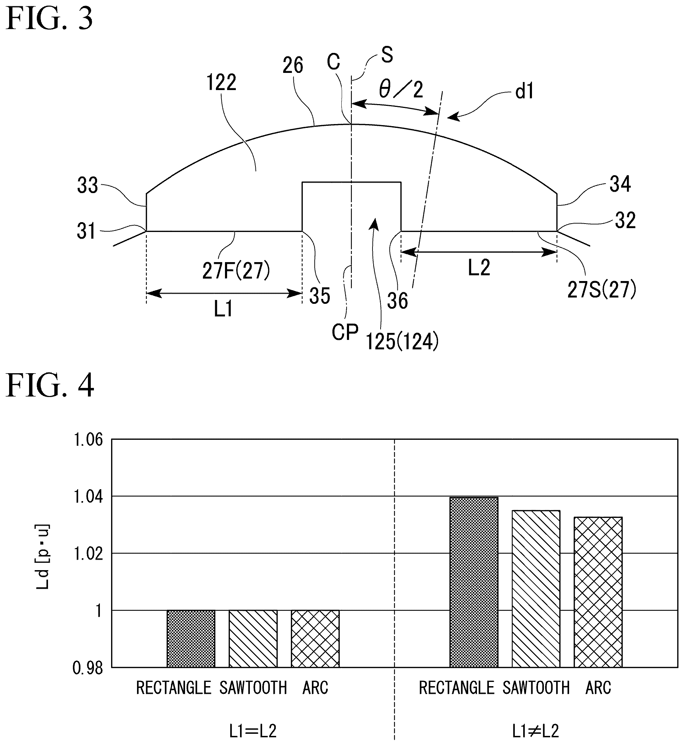

FIG. 3 is an enlarged view showing a region near a permanent magnet constituting a conventional permanent magnet synchronous electric motor, and is a cross-sectional view seen in the axial direction. The stator is omitted in FIG. 3. In FIG. 3, configurations not described are similar to those in FIG. 1A.

As shown in FIG. 3, the conventional permanent magnet synchronous electric motor has a permanent magnet 122 fixed to a stator. A protruding portion 124 of the stator of the conventional permanent magnet synchronous electric motor engages with a recessed portion 125 of the permanent magnet 122. A shape of the recessed portion 125 is mirror symmetrical with respect to a circumferential center of the permanent magnet 122. That is, in the permanent magnet 122, when a distance between the first magnet end 31 and the first recessed-portion end 35 is L1 and a distance between the second magnet end 32 and the second recessed-portion end 36 is L2, L1 = L2 is satisfied. Furthermore, the magnet center line S intersects the recessed portion 125, but does not intersect the first region 27F.

Next, effects of the first embodiment will be described.

In a permanent magnet synchronous electric motor, it is not possible to generate a terminal voltage Vt exceeding an input voltage Vi to output a torque T.

Generally, when a rotation speed of an electric motor increases, the terminal voltage Vt increases according to the following expressions.

$$Vt = \sqrt{(Vd^2 + Vq^2)} \cdots (1)$$

$$Vd = RId + \omega LqIq \cdots (2)$$

$$Vq = RIq + \omega\Phi m + \omega dLdId \cdots (3)$$

$$\omega = 2\pi f = 2\pi(N/60)pn \cdots (4)$$

Here, Vd is a d-axis voltage. Vq is a q-axis voltage. R is a phase resistance. Id is a d-axis current. Iq is a q-axis current. Φm is a magnet magnetic flux. Ld is a d-axis inductance. Lq is a q-axis inductance. ω is an angular velocity. f is a frequency. N is a rotation speed per minute. pn is the number of pole pairs.

As a method of controlling a permanent magnet synchronous electric motor, a so-called flux-weakening control that suppresses an increase in terminal voltage is known as a control method of increasing an output torque during high-speed rotation.

This flux-weakening control is a control method of applying the d-axis current Id in a direction that weakens the magnet magnetic flux Φm. In this control method, in a case in which the d-axis inductance Ld is small, it is necessary to cause a large amount of the d-axis current Id to flow to the electric motor.

However, there is an upper limit to the current that can be applied to the electric motor. If a current supplied from an inverter to the electric motor is Iinv, the following expression is obtained.

$$\sqrt{3} \times Iinv = \sqrt{(Id^2 + Iq^2)} \cdots (5)$$

The torque T output by the SPM type permanent magnet synchronous electric motor is generally expressed by the following expression.

$$T = Pn\Phi mIq \cdots (6)$$

Therefore, when the d-axis current Id increases, a q-axis current Iq for outputting the torque T decreases, and a torque output decreases. Therefore, in order to increase the torque T during high-speed rotation, it is necessary to effectively obtain the flux-weakening control with a small amount of the d-axis current Id, and it is necessary to increase the d-axis inductance Ld.

Therefore, it is possible to increase the d-axis inductance Ld by employing the structure shown in FIG. 3.

Also, in a case in which a harmonic component is contained in a magnetic flux of the permanent magnet, the torque T generated according to expression (6) contains a harmonic pulsation, and this torque pulsation is called as a torque ripple. Since the torque ripple can cause vibration or noise, measures to reduce it are generally taken.

As one of the measures, a method of applying a structure called stage skew to a rotor structure is known. This structure is constituted by two or more stages of rotors, and when circumferential center positions of permanent magnets of the stages are compared, there is an angular difference, which is called as a skew angle. When the angular difference is adjusted, it is possible to reduce the torque ripple in the entire electric motor.

However, as shown in FIG. 2A, an electrical angle displacement (angular difference) of Pn×θ/2 occurs between the d-axis position d1 and the circumferential center position CP of the permanent magnet 22 in each stage of the rotor 20 throughout the entire motor.

In contrast, in a case in which the d-axis position d1 coincides with the circumferential center position CP, it is possible to realize an effective increase in the d-axis inductance Ld in the structure shown in FIG. 3. However, when the stage skew structure with the skew angle θ is applied, there is an angular difference between the circumferential center position CP of the protruding portion 124 of each stage and the d-axis position d1 in the structure shown in FIG. 3. Therefore, the d-axis inductance Ld cannot be increased efficiently.

The first embodiment solves problems of the conventional permanent magnet synchronous electric motor.

Specifically, as shown in FIG. 2A, a structure satisfying L1 ≠ L2 is obtained by displacing the protruding portion 24 from the circumferential center position CP of the magnet in a direction opposite to the skew direction. FIG. 4 is a diagram showing a comparison result in which a case of the condition L1 = L2 in the conventional electric motor and a case of the condition L1 ≠ L2 in the first embodiment are compared regarding the d-axis inductance Ld.

In FIG. 4, the vertical axis represents the d-axis inductance Ld, and the horizontal axis represents a shape of the recessed portion. "Rectangle" refers to a shape of the recessed portion shown in FIGS. 2A and 3. "Sawtooth" refers to a shape of a single tooth constituting a saw having a plurality of teeth. "Arc" refers to substantially a U-shape or substantially a C-shape.

In FIG. 4, the d-axis inductance Ld in a case in which L1 = L2 is normalized to 1.0. The "sawtooth" corresponds to the shape shown in modified example 1A to be described later. Also, the "arc" corresponds to the shape shown in modified example 1B to be described later.

As shown in FIG. 4, when L1 ≠ L2 is set as shown in the first embodiment, the d-axis inductance Ld can be increased more than in the conventional permanent magnet synchronous electric motor.

Furthermore, the permanent magnet synchronous electric motor 100 includes the first magnet group 41 and the second magnet group 42 adjacent to each other in the Z direction, and the rotor 20 has the stage skew structure between the first magnet group 41 and the second magnet group 42. Therefore, the d-axis inductance Ld can be efficiently improved.

Furthermore, unlike the conventional permanent magnet synchronous electric motor, the inter-recessed portion center angle M is smaller than the skew angle θ in the first embodiment. Also, L1 ≠ L2 is satisfied, and L1 > L2 is satisfied. Furthermore, a value of L1/L2 is in a range of 1.0 < L1/L2 < 1.6. Therefore, the d-axis inductance Ld can be improved more efficiently.

<Modified example of the first embodiment>

Next, modified examples 1A and 1B of the permanent magnet synchronous electric motor according to the first embodiment will be described.

In the description of modified examples 1A and 1B, description of portions common to those in the first embodiment described above will be omitted.

<Modified example 1A>

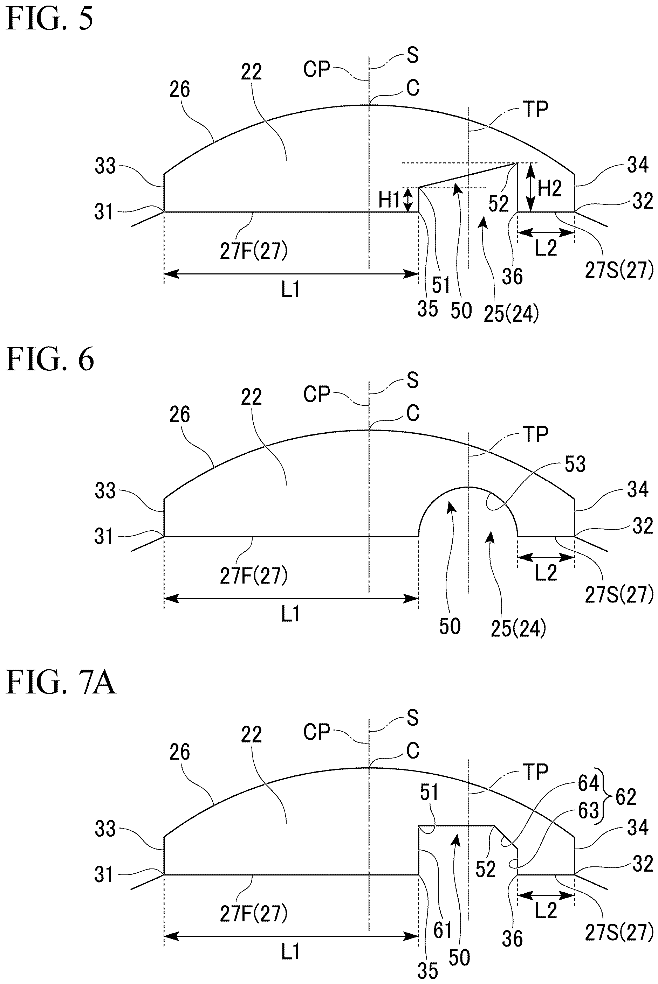

FIG. 5 is an enlarged view showing a region near a permanent magnet constituting modified example 1A, and is a cross-sectional view seen in the axial direction.

As shown in FIG. 5, the recessed portion 25 has a first bottom end 51 and a second bottom end 52. Both the first bottom end 51 and the second bottom end 52 form a bottom 50 of the recessed portion 25. The second bottom end 52 is spaced apart from the first bottom end 51. When a distance in the radial direction between the first recessed-portion end 35 and the first bottom end 51 is H1 and a distance in the radial direction between the second recessed-portion end 36 and the second bottom end 52 is H2, H1 ≠ H2 is satisfied. In the present modified example, H1 < H2 is satisfied. Furthermore, in the present modified example, L1 ≠ L2 is satisfied.

According to modified example 1A, as shown in the results of "L1 ≠ L2" and "sawtooth" in FIG. 4, the d-axis inductance Ld can be increased more than in the conventional permanent magnet synchronous electric motor.

<Modified example 1B>

FIG. 6 is an enlarged view showing a region near a permanent magnet constituting modified example 1B, and is a cross-sectional view seen in the axial direction. As shown in FIG. 6, a surface 53 forming the bottom 50 of the recessed portion 25 has an arcuate shape. Furthermore, in the present modified example, L1 ≠ L2 is satisfied.

According to modified example 1B, as shown in the results of "L1 ≠ L2" and "arc" in FIG. 4, the d-axis inductance Ld can be increased more than in the conventional permanent magnet synchronous electric motor.

Second Embodiment

A permanent magnet synchronous electric motor according to a second embodiment will be described.

In the second embodiment, members the same as those in the above-described embodiment and modified examples will be denoted by the same reference signs, and description thereof will be omitted or simplified.

A recessed portion 25 that engages with a protruding portion 24 will be described in detail with reference to FIG. 7A.

FIG. 7A is an enlarged view showing a region near a permanent magnet 22, and is a cross-sectional view seen in the axial direction. FIG. 7A corresponds to FIG. 2A and is an enlarged view showing the portion surrounded by the broken line portion A in FIG. 1A. Although not shown in FIG. 7A, the permanent magnet synchronous electric motor according to the second embodiment is constituted by a stator 10 and a rotor 20 similarly to FIG. 1.

As shown in FIG. 7A, the permanent magnet synchronous electric motor according to the second embodiment differs from the permanent magnet synchronous electric motor according to the first embodiment in that an inclined surface connected to a second bottom end 52 is formed inside the recessed portion 25.

Specifically, the recessed portion 25 has a first bottom end 51 and the second bottom end 52. Both the first bottom end 51 and the second bottom end 52 form a bottom 50 of the recessed portion 25. The second bottom end 52 is spaced apart from the first bottom end 51. The recessed portion 25 has a first inner wall 61 and a second inner wall 62. The first inner wall 61 is formed between a first recessed-portion end 35 and the first bottom end 51 and extends in the radial direction. The second inner wall 62 is formed between a second recessed-portion end 36 and the second bottom end 52. The second inner wall 62 has a vertical surface 63 and an inclined surface 64. The vertical surface 63 is connected to the second recessed-portion end 36 and extends in the radial direction. The inclined surface 64 is connected to the vertical surface 63 and the second bottom end 52, and linearly extends to be inclined with respect to the vertical surface 63.

Furthermore, L1 ≠ L2 is satisfied, and L1 > L2 is satisfied in the second embodiment. A value obtained by dividing L1 by L2, that is, a value of L1/L2, is within a range of 1.0 < L1/L2 < 1.6.

<Modified example 2A of the second embodiment>

Next, modified example 2A of the permanent magnet synchronous electric motor according to the second embodiment will be described.

In the description of modified example 2A, description of portions common to those in the first embodiment and the second embodiment described above will be omitted.

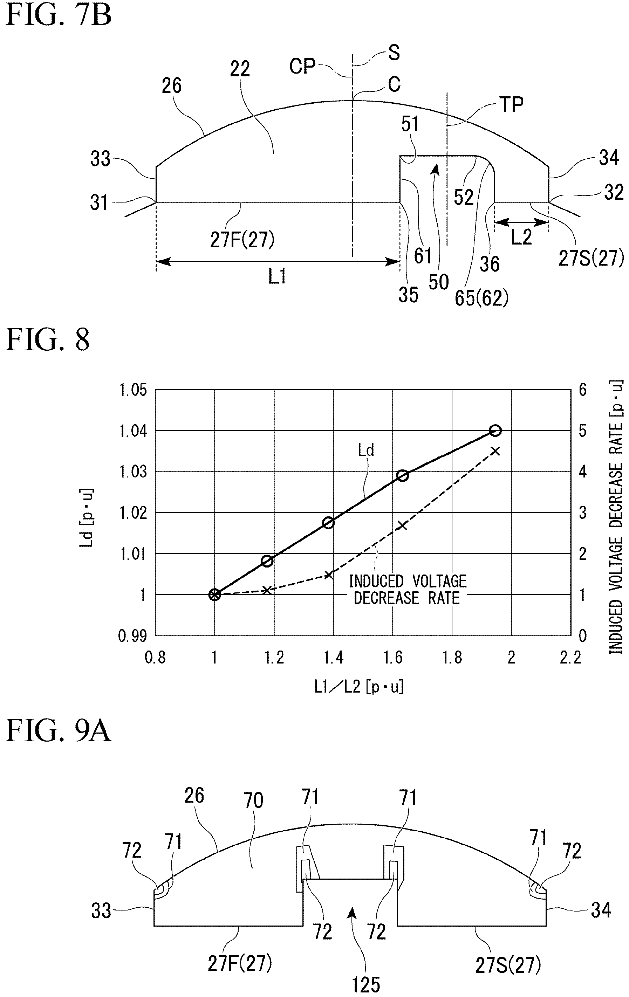

The recessed portion 25 that engages with the protruding portion 24 will be described in detail with reference to FIG. 7B.

FIG. 7B is an enlarged view showing a region near the permanent magnet 22, and is a cross-sectional view seen in the axial direction. FIG. 7B corresponds to FIG. 2A and is an enlarged view showing the portion surrounded by the broken line portion A in FIG. 1A. Although not shown in FIG. 7B, the permanent magnet synchronous electric motor according to modified example 2A is constituted by the stator 10 and the rotor 20 similarly to FIG. 1.

As shown in FIG. 7B, the permanent magnet synchronous electric motor according to modified example 2A differs from the permanent magnet synchronous electric motor according to the first embodiment in that a curved surface connected to the second bottom end 52 is formed inside the recessed portion 25.

Specifically, the recessed portion 25 has the first bottom end 51 and the second bottom end 52. Both the first bottom end 51 and the second bottom end 52 form the bottom 50 of the recessed portion 25. The second bottom end 52 is spaced apart from the first bottom end 51. The recessed portion 25 has the first inner wall 61 and the second inner wall 62. The first inner wall 61 is formed between the first recessed-portion end 35 and the first bottom end 51 and extends in the radial direction. The second inner wall 62 is formed between the second recessed-portion end 36 and the second bottom end 52. The second inner wall 62 has a curved surface 65 connected to the second bottom end 52.

Furthermore, L1 ≠ L2 is satisfied, and L1 > L2 is satisfied in modified example 2A. A value obtained by dividing L1 by L2, that is, a value of L1/L2, is within a range of 1.0 < L1/L2 < 1.6.

<Effects>

Next, an irreversible demagnetization phenomenon related to a change in magnetic force and a decrease in magnet magnetic flux due to demagnetization will be described, and then effects obtained by the second embodiment will be described.

For example, in the structure described in the first embodiment, a shape of the protruding portion 24 of the rotor core 21 is rectangular, and the protruding portion center position TP of the protruding portion 24 is displaced from the circumferential center of the permanent magnet 22. Furthermore, in this structure, an outer shape of the stator-facing surface 26 is arcuate. In this case, at a position of a corner of the protruding portion 24, in other words, at the second bottom end 52 of the recessed portion 25, a distance between the stator-facing surface 26 and the second bottom end 52 is extremely small.

In a permanent magnet, a phenomenon called irreversible demagnetization, in which a residual magnetic flux density Br of the permanent magnet decreases due to an effect of a temperature rise in the permanent magnet or an effect of a demagnetizing field in which a magnetic field from the stator is applied to the permanent magnet in a direction opposite to the magnetization direction, occurs.

Ease of occurrence of such an irreversible demagnetization phenomenon is related to a coercive force of the permanent magnet and a permeance coefficient Pc that is determined by a magnetic circuit. The permeance coefficient Pc depends on a thickness of the magnet in a magnetization direction and magnetic resistance. In a magnetic circuit in which a magnetic gap between the stator and rotor is narrow such as a permanent magnet synchronous electric motor, the permeance coefficient Pc can be approximately determined by the following expression.

$$Pc \approx Hm/gm \cdots (7)$$

Here, Hm is a thickness of the permanent magnet in the magnetization direction. gm is a magnetic gap between the stator and the rotor. From expression (7), Pc decreases as the thickness Hm of the permanent magnet in the magnetization direction decreases. This decrease in Pc affects ease of occurrence of the irreversible demagnetization phenomenon.

FIG. 8 is a diagram showing a comparison result in which the permanent magnet synchronous electric motor according to the first embodiment and the conventional permanent magnet synchronous electric motor are compared regarding the d-axis inductance Ld and an induced voltage decrease rate after demagnetization. FIG. 8 shows the induced voltage decrease rate due to demagnetization and the d-axis inductance Ld with respect to L1/L2 when a condition of the permanent magnet 22 is set to L1 > L2. Furthermore, the d-axis inductance Ld and the induced voltage decrease rate in a case in which L1 = L2 are normalized to 1.0.

As is apparent from FIG. 8, as L1/L2 increases, the d-axis inductance Ld increases, but the induced voltage decrease rate also increases.

Furthermore, focusing on an increasing tendency of the d-axis inductance Ld, an amount of increase in the d-axis inductance Ld is saturated. On the other hand, focusing on an increasing tendency of the induced voltage decrease rate, it is found that an amount of increase in the induced voltage decrease rate is not saturated.

Therefore, it is possible to effectively increase the d-axis inductance Ld within a range in which L1/L2 satisfies 1.0 < L1/L2 < 1.6, but demagnetization progresses significantly in a range in which L1/L2 > 1.6 is satisfied.

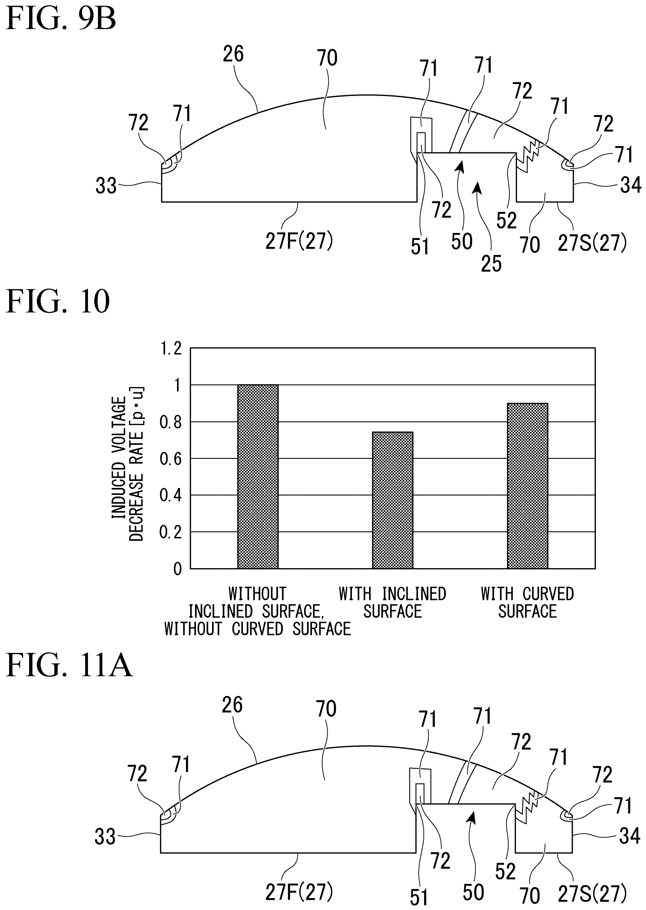

FIGS. 9A and 9B show results obtained by calculating a demagnetization factor distribution using a magnetic field analysis on demagnetized states.

FIG. 9A is a diagram showing a demagnetization factor distribution of the conventional permanent magnet synchronous electric motor. In FIG. 9A, L1 = L2 is satisfied as a condition of the permanent magnet. FIG. 9B is a diagram showing a demagnetization factor distribution of the permanent magnet synchronous electric motor according to the first embodiment. In FIG. 9B, L1 ≠ L2 and L1/L2 > 1.6 are satisfied as the condition of the permanent magnet.

In FIGS. 9A and 9B, the regions indicated by reference signs 70, 71, and 72 show a progress state of demagnetization. The region indicated by reference sign 70 shows that an amount demagnetization progressed is the least. The region indicated by reference sign 72 shows that the amount demagnetization progressed is the largest. The region indicated by reference sign 71 indicates that the amount demagnetization progressed is larger than that of the region indicated by reference sign 70 and is smaller than that of the region indicated by reference sign 72. When the results shown in FIG. 9A and FIG. 9B are compared, the region 72 arises in a portion in which a distance between the second bottom end 52 of the recessed portion 25 and the stator-facing surface 26 is small. In other words, it is found that a range in which demagnetization progresses extends as the distance between the corner of the protruding portion 24 and the stator-facing surface 26 becomes smaller.

A decrease in the residual magnetic flux density Br due to progress of demagnetization leads to a decrease in magnet magnetic flux Φm. Therefore, a torque T decreases due to the calculation result based on expression (6). Therefore, an output of the permanent magnet synchronous electric motor decreases.

The second embodiment solves the above-described problems.

FIG. 10 is a diagram showing a comparison result in which the permanent magnet synchronous electric motor according to the first embodiment, the permanent magnet synchronous electric motor according to the second embodiment, and the permanent magnet synchronous electric motor according to modified example 2A are compared regarding the induced voltage decrease rate after demagnetization. In FIG. 10, the induced voltage decrease rate of the permanent magnet 22 of the first embodiment is normalized to 1.0. Specifically, "without the inclined surface, without the curved surface" corresponds to the first embodiment. Moreover, "with the inclined surface" corresponds to the second embodiment. Furthermore, "with the curved surface" corresponds to modified example 2A.

As shown in FIG. 10, it is found that the induced voltage decrease rate in the second embodiment in which the permanent magnet 22 having the inclined surface 64 is used is smaller than that in the first embodiment. Similarly, it is found that the induced voltage decrease rate in modified example 2A in which the permanent magnet 22 having the curved surface 65 is used is smaller than that in the first embodiment.

FIGS. 11A to 11C show results obtained by calculating a demagnetization factor distribution using a magnetic field analysis on demagnetized states.

FIG. 11A is a diagram showing the demagnetization factor distribution of the permanent magnet 22 according to the first embodiment.

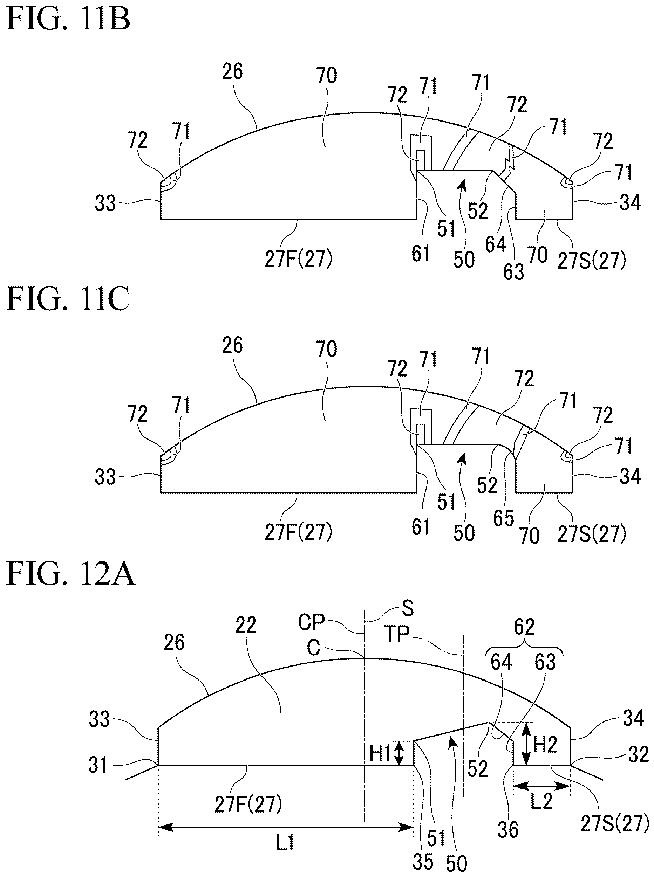

FIG. 11B is a diagram showing the demagnetization factor distribution of the permanent magnet 22 according to the second embodiment.

FIG. 11C is a diagram showing the demagnetization factor distribution of the permanent magnet 22 according to modified example 2A.

In FIGS. 11A to 11C, the regions indicated by reference signs 70, 71, and 72 show a progress state of demagnetization. The region indicated by reference sign 70 shows that an amount demagnetization progressed is the least. The region indicated by reference sign 72 shows that the amount demagnetization progressed is the largest. The region indicated by reference sign 71 indicates that the amount demagnetization progressed is larger than that of the region indicated by reference sign 70 and is smaller than that of the region indicated by reference sign 72.

When the results shown in FIG. 11A to FIG. 11C are compared, it is found that, in a case of the second embodiment having the inclined surface and a case of modified example 2A having the curved surface, a total area in which the regions 71 and 2 arise is smaller than that in the first embodiment without the inclined surface or the curved surface.

In other words, when the inclined surface or the curved surface is formed, it is possible to increase a distance between the second bottom end 52 and a point on the stator-facing surface 26 closest to the second bottom end 52. Therefore, it is found that, in the second embodiment and modified example 2A, the progress of demagnetization can be further suppressed than in the first embodiment.

Therefore, according to the second embodiment and modified example 2A, in even a case in which a flux-weakening control is performed, a high output of the electric motor can be achieved. Also, since L1/L2 is within a range that satisfies 1.0 < L1/L2 < 1.6, demagnetization resistance can be improved. That is, both the high output of the electric motor and improvement in demagnetization resistance can be achieved.

<Modified examples 2B and 2C of the second embodiment>

Next, modified examples 2B and 2C of the permanent magnet synchronous electric motor according to the second embodiment will be described.

In the description of modified examples 2B and 2C, description of portions common to those in the first embodiment and the second embodiment described above will be omitted.

<Modified example 2B>

FIG. 12A is an enlarged view showing a region near a permanent magnet constituting modified example 2B, and is a cross-sectional view seen in the axial direction.

As shown in FIG. 12A, the recessed portion 25 has the first bottom end 51 and the second bottom end 52. Both the first bottom end 51 and the second bottom end 52 form the bottom 50 of the recessed portion 25. The second bottom end 52 is spaced apart from the first bottom end 51. When a distance in the radial direction between the first recessed-portion end 35 and the first bottom end 51 is H1 and a distance in the radial direction between the second recessed-portion end 36 and the second bottom end 52 is H2, H1 ≠ H2 is satisfied. In the present modified example, H1 < H2 is satisfied. Furthermore, in the present modified example, L1 ≠ L2 is satisfied. A value of L1/L2 is within a range of 1.0 < L1/L2 < 1.6.

Furthermore, in the present modified example, the recessed portion 25 has the first inner wall 61 and the second inner wall 62. The first inner wall 61 is formed between the first recessed-portion end 35 and the first bottom end 51 and extends in the radial direction. The second inner wall 62 is formed between the second recessed-portion end 36 and the second bottom end 52. The second inner wall 62 has the vertical surface 63 and the inclined surface 64. The vertical surface 63 is connected to the second recessed-portion end 36 and extends in the radial direction. The inclined surface 64 is connected to the vertical surface 63 and the second bottom end 52, and linearly extends to be inclined with respect to the vertical surface 63.

<Modified example 2C>

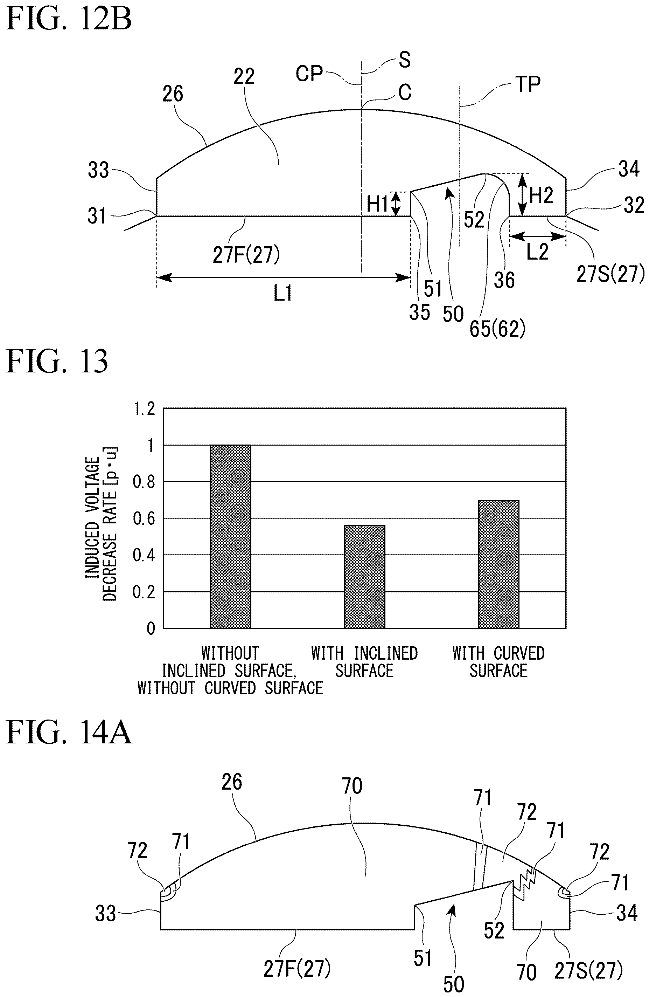

FIG. 12B is an enlarged view showing a region near a permanent magnet constituting modified example 2C, and is a cross-sectional view seen in the axial direction.

In FIG. 12B, H1 ≠ H2 is satisfied, H1 < H2 is satisfied, and L1 ≠ L2 is satisfied similarly to FIG. 12A. A value of L1/L2 is within a range of 1.0 < L1/L2 < 1.6.

Furthermore, in the present modified example, the recessed portion 25 has the first inner wall 61 and the second inner wall 62. The first inner wall 61 is formed between the first recessed-portion end 35 and the first bottom end 51 and extends in the radial direction. The second inner wall 62 is formed between the second recessed-portion end 36 and the second bottom end 52. The second inner wall 62 has the curved surface 65 connected to the second bottom end 52.

<Effects>

FIG. 13 is a diagram showing a comparison result in which the permanent magnet synchronous electric motor according to modified example 1A, the permanent magnet synchronous electric motor according to modified example 2B, and the permanent magnet synchronous electric motor according to modified example 2C are compared regarding the induced voltage decrease rate after demagnetization. In FIG. 13, the induced voltage decrease rate of the permanent magnet 22 of modified example 1A is normalized to 1.0. Specifically, "without the inclined surface, without the curved surface" corresponds to modified example 1A. **In** other words, in modified example 1A, H1 < H2 is satisfied as described above, but the inclined surface or the curved surface is not formed in the recessed portion 25. Moreover, "with the inclined surface" corresponds to modified example 2B. Furthermore, "with the curved surface" corresponds to modified example 2C.

As shown in FIG. 13, it is found that the induced voltage decrease rate in modified example 2B in which the permanent magnet 22 having the inclined surface 64 is used is smaller than that in modified example 1A. Similarly, it is found that the induced voltage decrease rate in modified example 2C in which the permanent magnet 22 having the curved surface 65 is used is smaller than that in modified example 1A.

FIGS. 14A to 14C show results obtained by calculating a demagnetization factor distribution using a magnetic field analysis on demagnetized states.

FIG. 14A is a diagram showing the demagnetization factor distribution of the permanent magnet 22 according to modified example 1A.

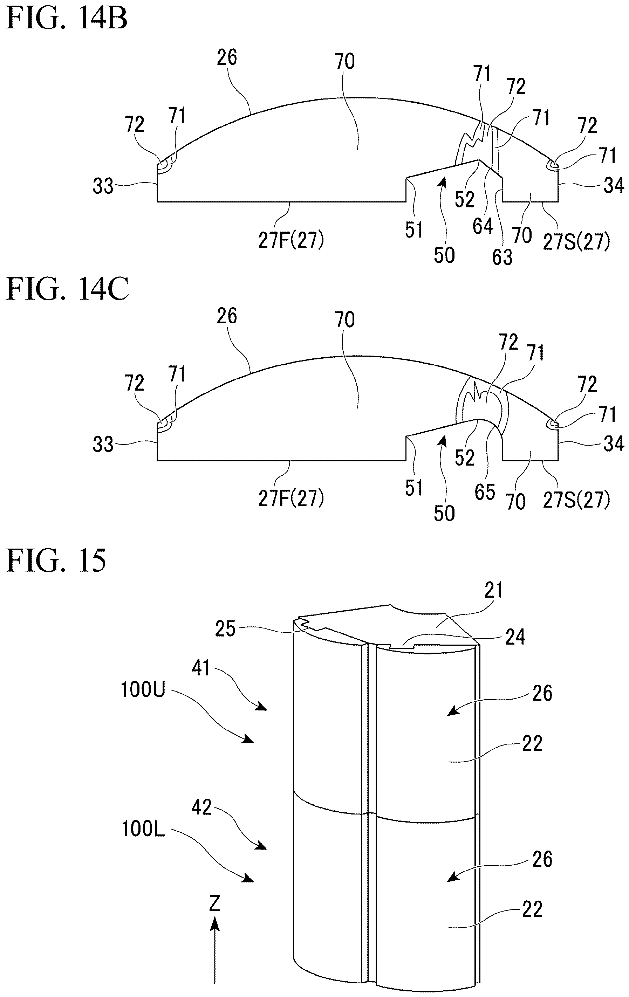

FIG. 14B is a diagram showing the demagnetization factor distribution of the permanent magnet 22 according to modified example 2B.

FIG. 14C is a diagram showing the demagnetization factor distribution of the permanent magnet 22 according to modified example 2C.

In FIGS. 14A to 14C, the regions indicated by reference signs 70, 71, and 72 show a progress state of demagnetization. The region indicated by reference sign 70 shows that an amount demagnetization progressed is the least. The region indicated by reference sign 72 shows that the amount demagnetization progressed is the largest. The region indicated by reference sign 71 indicates that the amount demagnetization progressed is larger than that of the region indicated by reference sign 70 and is smaller than that of the region indicated by reference sign 72.

When the results shown in FIG. 14A to FIG. 14C are compared, it is found that, in a case of modified example 2B having the inclined surface and a case of modified example 2C having the curved surface, a total area in which the regions 71 and 2 arise is smaller than that in modified example 1A without the inclined surface or the curved surface.

In other words, when the inclined surface or the curved surface is formed, it is possible to increase a distance between the second bottom end 52 and a point on the stator-facing surface 26 that is closest to the second bottom end 52. Therefore, it is found that, in modified examples 2B and 2C, the progress of demagnetization can be further suppressed than in modified example 1A.

Therefore, according to modified example 2B and modified example 2C, in even a case in which the flux-weakening control is performed, a high output of the electric motor can be achieved. Also, since L1/L2 is within a range that satisfies $1.0 < L1/L2 < 1.6$, demagnetization resistance can be improved. That is, both the high output of the electric motor and improvement in demagnetization resistance can be achieved.

Third Embodiment

A permanent magnet synchronous electric motor according to a third embodiment will be described.

In the third embodiment, members the same as those in the above-described embodiments and modified examples will be denoted by the same reference signs, and description thereof will be omitted or simplified.

FIG. 15 is a perspective view showing the permanent magnet synchronous electric motor according to the third embodiment.

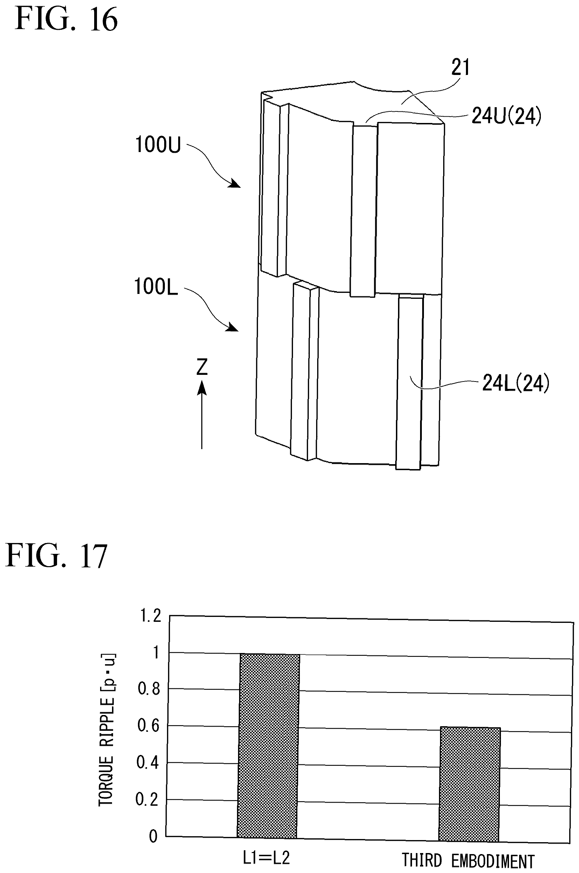

FIG. 16 is a perspective view that shows only a rotor core 21 including a protruding portion 24. In other words, FIG. 16 shows a state in which a plurality of permanent magnets 22 have been removed from the permanent magnet synchronous electric motor.

As shown in FIGS. 15 and 16, the permanent magnet synchronous electric motor according to the third embodiment differs from the permanent magnet synchronous electric motor according to the first embodiment in that circumferential center positions CP of the permanent magnets 22 coincide at an upper stage and a lower stage.

Specifically, of the plurality of permanent magnets 22, stator-facing surfaces 26 of the permanent magnets 22 aligned in the Z direction in which the rotating shaft 23 extends coincide with each other in the Z direction. There is no skew applied between the permanent magnets 22 aligned in the Z direction. Only a recessed portion 25 of each of the plurality of permanent magnets 22 and the protruding portion of the rotor core 21 are skewed.

The permanent magnet synchronous electric motor according to the third embodiment will be described more specifically.

The permanent magnet synchronous electric motor according to the third embodiment has an upper stage portion 100U and a lower stage portion 100L adjacent to the upper stage portion 100U in the Z direction. The upper stage portion 100U is an example of a first rotor portion. The lower stage portion 100L is an example of a second rotor portion.

The plurality of permanent magnets 22 include a first magnet group 41 disposed in the upper stage portion 100U and a second magnet group 42 disposed in the upper stage portion 100U. The each of the plurality of permanent magnets 22 constituting the first magnet group 41 is the first permanent magnet described above. The each of the plurality of permanent magnets 22 constituting the second magnet group 42 is the second permanent magnet described above.

The stator-facing surface 26 of the first permanent magnet constituting the first magnet group 41 coincides with the stator-facing surface 26 of the second permanent magnet constituting the second magnet group 42 in the Z direction. In other words, a position of a center point C in the circumferential direction of the stator-facing surface 26 of the first permanent magnet and a position of the center point C in the circumferential direction of the stator-facing surface 26 of the second permanent magnet coincide in the axial direction. The center point C of the stator-facing surface 26 in the circumferential direction has been described with reference to FIG. 2A.

The protruding portion 24 of the rotor core 21 includes a first protruding portion 24U disposed in the upper stage portion 100U and a second protruding portion 24L disposed in the lower stage portion 100L. The first protruding portion 24U is fitted into the recessed portion 25 of the first permanent magnet constituting the first magnet group 41. The second protruding portion 24L is fitted into the recessed portion 25 of the second permanent magnet constituting the second magnet group 42.

In the circumferential direction, the second protruding portion 24L is displaced at a skew angle from the first protruding portion 24U.

That is, as shown in FIG. 16, a position of the first protruding portion 24U (24) in the circumferential direction of the upper stage portion 100U and a position of the second protruding portion 24L (24) in the circumferential direction of the lower stage portion 100L are displaced from the circumferential center position CP of the permanent magnet 22 as shown in FIG. 2A. The position of the first protruding portion 24U in the circumferential direction of the upper stage portion 100U and a position of the second protruding portion 24L in the circumferential direction of the lower stage portion 100L are mirror symmetrical with respect to the circumferential center position CP of the permanent magnet 22.

<Effects>

Next, effects obtained by the third embodiment will be described while describing a manufacturing process for the rotor of the permanent magnet synchronous electric motor.

The manufacturing process for the rotor of the permanent magnet synchronous electric motor includes a magnetization process of attaching the permanent magnet 22 to the rotor core 21.

In the magnetization process of the permanent magnet, a method in which the permanent magnet 22 is magnetized using a magnetizer after being attached to the rotor core 21 is widely used. However, in a case in which a stage skew structure is applied to a structure of a rotor 20, since magnetization directions of the permanent magnets in the upper stage and lower stage differ by a skew angle θ, it is difficult to magnetize the permanent magnets in both stages simultaneously, and magnetization is performed for each stage.

Therefore, an increase in the number of times of magnetization leads to a shortened life of the magnetizer or a deterioration in a tact time in manufacturing the rotor.

The third embodiment solves the above-described problems.

As shown in FIG. 16, the position of the first protruding portion 24U (24) in the circumferential direction of the upper stage portion 100U and the position of the second protruding portion 24L (24) in the circumferential direction of the lower stage portion 100L are mirror symmetrical with respect to the circumferential center position CP. Due to an effect of the positions of the protruding portions 24, a phase difference occurs between harmonic components of the magnetic flux of the permanent magnets in the upper stage portion 100U and the lower stage portion 100L.

Therefore, it is possible to reduce a torque ripple in the entire electric motor by appropriately positioning the protruding portion 24 in the circumferential direction and canceling out the harmonic components of the magnetic flux of the permanent magnets at each stage.

FIG. 17 is a diagram showing a comparison result in which a case of the condition L1 = L2 in the conventional electric motor and a case of the condition L1 ≠ L2 in the third embodiment are compared regarding the torque ripple. In FIG. 17, the torque ripple when L1 = L2 is normalized to 1.0.

As shown in FIG. 17, it is found that the torque ripple is reduced in the case of the condition L1 ≠ L2 in the third embodiment.

Therefore, according to the third embodiment, it is possible to reduce the number of steps required for the magnetization process. Furthermore, in even a case in which a flux-weakening control is performed as in the conventional case, a high output of the electric motor can be achieved or the torque ripple can be reduced.

Fourth Embodiment

A permanent magnet synchronous electric motor according to a fourth embodiment will be described.

In the fourth embodiment, members the same as those in the above-described embodiments and modified examples will be denoted by the same reference signs, and description thereof will be omitted or simplified.

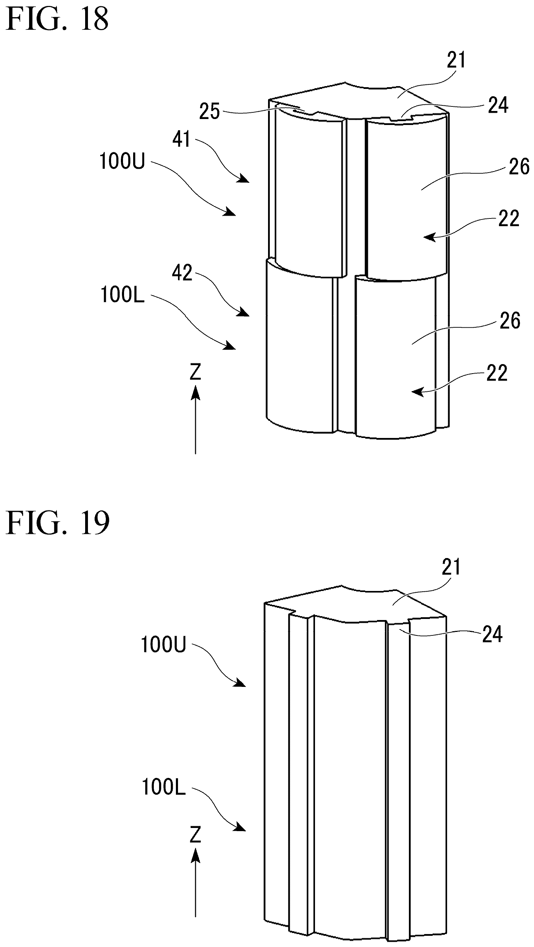

FIG. 18 is a perspective view showing a permanent magnet synchronous electric motor according to the fourth embodiment.

FIG. 19 is a perspective view showing only a rotor core 21 including a protruding portion 24. In other words, FIG. 19 shows a state in which a plurality of permanent magnets 22 have been removed from the permanent magnet synchronous electric motor.

As shown in FIGS. 18 and 19, the permanent magnet synchronous electric motor according to the fourth embodiment differs from the permanent magnet synchronous electric motor according to the first embodiment in that circumferential positions of the protruding portion 24 of the rotor core coincide at an upper stage and a lower stage.

Specifically, positions of the protruding portion 24 in the rotor core 21 coincide in the Z direction, and only recessed portions 25 of the permanent magnets 22 are skewed. Also, as shown in FIG. 18, in each of the upper stage and the lower stage, a position of the recessed portion 25 of the permanent magnet 22 in the circumferential direction is displaced from a circumferential center position CP of the permanent magnet 22, and L1 ≠ L2 is satisfied.

The permanent magnet synchronous electric motor according to the fourth embodiment will be described more specifically.

The permanent magnet synchronous electric motor according to the fourth embodiment has an upper stage portion 100U and a lower stage portion 100L adjacent to the upper stage portion 100U in the Z direction.

The plurality of permanent magnets 22 include a first magnet group 41 disposed in the upper stage portion 100U and a second magnet group 42 disposed in the upper stage portion 100U. The plurality of permanent magnets 22 constituting the first magnet group 41 are each a first permanent magnet. The plurality of permanent magnets 22 constituting the second magnet group 42 are each a second permanent magnet.

A stator-facing surface 26 of the first permanent magnet constituting the first magnet group 41 is displaced in the Z direction from the stator-facing surface 26 of the second permanent magnet constituting the second magnet group 42. In other words, a position of a center point C in the circumferential direction of the stator-facing surface 26 of the first permanent magnet and a position of a center point C in the circumferential direction of the stator-facing surface 26 of the second permanent magnet do not coincide in the axial direction. The center point C of the stator-facing surface 26 in the circumferential direction has been described with reference to FIG. 2A.

The protruding portion 24 of the rotor core 21 extends continuously from the upper stage portion 100U to the lower stage portion 100L. The protruding portion 24 is fitted into the recessed portion 25 of the first permanent magnet constituting the first magnet group 41 and the recessed portion 25 of the second permanent magnet constituting the second magnet group 42.

In the circumferential direction, the stator-facing surface 26 of the first permanent magnet constituting the first magnet group 41 is displaced at a skew angle from the stator-facing surface 26 of the second permanent magnet constituting the second magnet group 42.

The position of the protruding portion 24 in the circumferential direction of the upper stage portion 100U and the position of the protruding portion 24 in the circumferential direction of the lower stage portion 100L are mirror symmetrical with respect to the circumferential center position CP of the permanent magnet 22.

<Effects>

Next, effects obtained by the fourth embodiment will be described while describing a manufacturing process for the rotor of the permanent magnet synchronous electric motor.

When a stage skew is applied to a rotor, in a manufacturing process of the rotor core for the permanent magnet synchronous electric motor, the rotor core is formed for each stage, and then the rotor core is fitted onto a rotating shaft so that a skew angle is generated.

Therefore, the number of steps and processing are required to realize the skew angle with high accuracy, and manufacturing costs of the rotor becomes higher compared to a manufacturing process of a rotor to which the stage skew is not applied.

The fourth embodiment solves the above-described problems.

As shown in FIG. 19, the protruding portions 24 in the upper stage portion 100U and the lower stage portion 100L of the rotor core 21 are the same in the circumferential direction. Therefore, it is not necessary to manufacture the rotor core 21 to have the protruding portions 24 that are divided corresponding to each of the upper stage portion 100U and the lower stage portion 100L.

Also, the position of the recessed portion 25 of the permanent magnet 22 satisfies $L1 \neq L2$, and the circumferential center positions CP of the permanent magnets 22 in the upper stage and the lower stage are mirror symmetrical with respect to the position of the recessed portion 25, resulting in an angular difference.

Due to the angular difference in the circumferential center positions CP of the permanent magnets 22, a phase difference occurs between harmonic components of the magnetic flux of the permanent magnets in the upper stage and the lower stage.

Therefore, it is possible to reduce a torque ripple in the entire electric motor by appropriately positioning the recessed portion 25 and canceling out the harmonic components of the magnetic flux of the permanent magnets at each stage. Furthermore, since the rotor core 21 can be integrally formed, the number of steps required for manufacturing the rotor core 21 can be reduced.

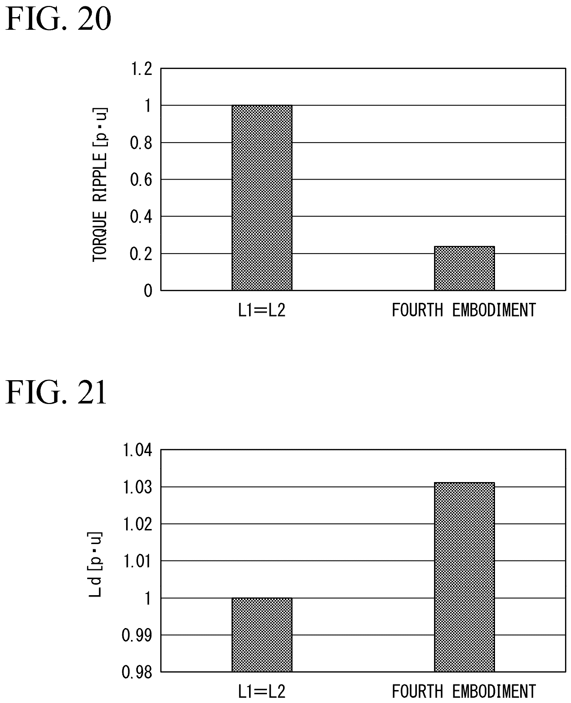

FIG. 20 is a diagram showing a comparison result in which a case of the condition $L1 = L2$ in the conventional electric motor and a case of the condition $L1 \neq L2$ in the fourth embodiment are compared regarding the torque ripple. In FIG. 20, the torque ripple when $L1 = L2$ is normalized to 1.0.

As shown in FIG. 20, it is found that the torque ripple is reduced in the case of the condition $L1 \neq L2$ in the fourth embodiment.

FIG. 21 is a diagram showing a comparison result in which a case of the condition $L1 = L2$ in the conventional electric motor and a case of the condition $L1 \neq L2$ in the fourth embodiment are compared regarding a d-axis inductance Ld. In FIG. 21, the d-axis inductance Ld when $L1 = L2$ is normalized to 1.0.

As shown in FIG. 21, the d-axis inductance Ld can be increased more effectively in the case of the condition $L1 \neq L2$ in the fourth embodiment.

Therefore, according to the fourth embodiment, the number of steps required for manufacturing the rotor core 21 can be reduced. Furthermore, in even a case in which a flux-weakening control is performed as in the conventional case, a high output of the electric motor can be achieved or the torque ripple can be reduced compared to the conventional structure.

Reference Signs List

10 Stator
11 Stator core
12 Core back
13 Teeth
14 Winding (coil portion)
15 Gap
20 Rotor
21 Rotor core
22 Permanent magnet
22A First permanent magnet (permanent magnet)
22B Second permanent magnet (permanent magnet)
23 Rotating shaft
24 Protruding portion
24L Second protruding portion (protruding portion)
24U First protruding portion (protruding portion)
25 Recessed portion
26 Stator-facing surface
27 Rotor-core-fixing surface
27A First rotor-core-fixing surface (rotor-core-fixing surface)
27B Second rotor-core-fixing surface (rotor-core-fixing surface)
27F First region
27S Second region
28 Outer circumferential surface
31 First magnet end

32 Second magnet end
33 First side surface
34 Second side surface
35 First recessed-portion end
36 Second recessed-portion end
37A First midpoint
37B Second midpoint
41 First magnet group
42 Second magnet group
50 Bottom
51 First bottom end
52 Second bottom end
53 Surface
61 First inner wall
62 Second inner wall
63 Vertical surface
64 Inclined surface
65 Curved surface
100 Permanent magnet synchronous electric motor
100L Lower stage portion (second rotor portion)
100U Upper stage portion (first rotor portion)
122 Permanent magnet
124 Protruding portion
125 Recessed portion
C Center point
C1 First center point
C2 Second center point
CL Center line
CP Circumferential center position
L1, L2 Distance
M Inter-recessed portion center angle
N1 First recessed portion center line
N2 Second recessed portion center line
O Axial center
S Magnet center line
S1 First magnet center line
S2 Second magnet center line
TP Protruding portion center position
θ Skew angle

**Claims**

1.  A permanent magnet synchronous electric motor comprising:

    a stator;
    a rotor rotatably disposed with respect to the stator, and including

        a rotor core that is constituted by an electrical steel sheet and includes one or more protruding portions protruding in a radial direction toward the stator, and
        a rotating shaft that is fixed to the rotor core; and

        a plurality of permanent magnets aligned in a circumferential direction of the rotor, each of which includes

    an arc-shaped stator-facing surface facing the stator with a gap therebetween,
    a rotor-core-fixing surface positioned on a side opposite to the stator-facing surface and fixed to an outer circumferential surface of the rotor core, and
    a recessed portion connected to a part of the rotor-core-fixing surface and into which the protruding portion is fitted, wherein

polarities of the stator-facing surfaces of two permanent magnets adjacent to each other in the circumferential direction among the plurality of permanent magnets are different from each other,
in the circumferential direction, the plurality of permanent magnets each has

    a first magnet end connected to the rotor-core-fixing surface, and
    a second magnet end connected to the rotor-core-fixing surface and positioned on a side opposite to the first magnet end,

in the circumferential direction, the recessed portion of each of the plurality of permanent magnets has

    a first recessed-portion end connected to the rotor-core-fixing surface, and
    a second recessed-portion end connected to the rotor-core-fixing surface and positioned on a side opposite to the first recessed-portion end,

the rotor-core-fixing surface has

    a first region positioned between the first magnet end and the first recessed-portion end, and
    a second region positioned between the second magnet end and the second recessed-portion end,

the recessed portion is positioned between the first region and the second region, and
L1 ≠ L2 is satisfied provided that a distance between the first magnet end and the first recessed-portion end in the first region is L1, and a distance between the second magnet end and the second recessed-portion end in the second region is L2.

2.  The permanent magnet synchronous electric motor according to claim 1,

wherein

the plurality of permanent magnets include a first magnet group and a second magnet group adjacent to each other in an axial direction in which the rotating shaft extends,
each of the plurality of permanent magnets constituting the first magnet group is a first permanent magnet,
each of the plurality of permanent magnets constituting the second magnet group is a second permanent magnet,
a skew angle is referred to as $\theta$,
the first permanent magnet is displaced by $\theta/2$ with respect to a d-axis of the permanent magnet synchronous electric motor in a counterclockwise direction in the circumferential direction,
the second permanent magnet is displaced by $\theta/2$ with respect to the d-axis of the permanent magnet synchronous electric motor in a clockwise direction in the circumferential direction,
a magnet center line extending radially outward from an axial center of the rotating shaft and passing through a circumferential center point of each of the plurality of permanent magnets intersects the first region, and
$L1 \neq L2$ is satisfied and $L1 > L2$ is satisfied.

3. The permanent magnet synchronous electric motor according to claim 1 or 2, wherein

the recessed portion has

a first bottom end forming a bottom of the recessed portion, and
a second bottom end forming the bottom of the recessed portion and spaced apart from the first bottom end, and

$H1 \neq H2$ is satisfied provided that a distance between the first recessed-portion end and the first bottom end in the radial direction is **H1** and a distance between the second recessed-portion end and the second bottom end in the radial direction is H2.

4. The permanent magnet synchronous electric motor according to claim 1 or 2, wherein a surface forming a bottom of the recessed portion has an arc shape.

5. The permanent magnet synchronous electric motor according to claim 2, wherein

the first permanent magnet has a first rotor-core-fixing surface fixed to an outer circumferential surface of the rotor core,
the first rotor-core-fixing surface is a surface corresponding to the rotor-core-fixing surface, and has

the first region having the distance L1 and having the first recessed-portion end, and
the second region having the distance L2 and having the second recessed-portion end,

the second permanent magnet has a second rotor-core-fixing surface fixed to an outer circumferential surface of the rotor core,
the second rotor-core-fixing surface is a surface corresponding to the rotor-core-fixing surface, and has

the first region having the distance L1 and having the first recessed-portion end, and
the second region having the distance L2 and having the second recessed-portion end,

a center point in a circumferential direction of the first permanent magnet is defined as a first center point,
a center point in a circumferential direction of the second permanent magnet is defined as a second center point,
a line extending radially outward from the axial center of the rotating shaft, passing through the first center point, and intersecting the first region of the first permanent magnet is defined as a first magnet center line,
a line extending radially outward from the axial center of the rotating shaft, passing through the second center point, and intersecting the first region of the second permanent magnet is defined as a second magnet center line,
a midpoint between the first recessed-portion end and the second recessed-portion end of the first permanent magnet in a direction parallel to the first rotor-core-fixing surface is defined as a first midpoint,
a midpoint between the first recessed-portion end and the second recessed-portion end of the second permanent magnet in a direction parallel to the second rotor-core-fixing surface is defined as a second midpoint,
a line extending radially outward from the axial center of the rotating shaft and passing through the first midpoint is defined as a first recessed portion center line,
a line extending radially outward from the axial center of the rotating shaft and passing through the second midpoint is defined as a second recessed portion center line,
an angle between the first magnet center line and the second magnet center line is the skew angle $\theta$,

an angle between the first recessed portion center line and the second recessed portion center line is an inter-recessed portion center angle,

the inter-recessed portion center angle is smaller than the skew angle θ, and

a value of L1/L2 is within a range of 1.0 < L1/L2 < 1.6 when L1 > L2 is satisfied.

6. The permanent magnet synchronous electric motor according to claim 2, wherein

the recessed portion has

a first bottom end forming a bottom of the recessed portion,

a second bottom end forming the bottom of the recessed portion and spaced apart from the first bottom end,

a first inner wall formed between the first recessed-portion end and the first bottom end and extending in the radial direction, and

a second inner wall formed between the second recessed-portion end and the second bottom end, and wherein

the second inner wall has

a vertical surface connected to the second recessed-portion end and extending in the radial direction, and

an inclined surface connected to the vertical surface and the second bottom end and extending linearly to be inclined with respect to the vertical surface.

7. The permanent magnet synchronous electric motor according to claim 2, wherein

the recessed portion has

a first bottom end forming a bottom of the recessed portion,

a second bottom end forming the bottom of the recessed portion and spaced apart from the first bottom end,

a first inner wall formed between the first recessed-portion end and the first bottom end and extending in the radial direction, and

a second inner wall formed between the second recessed-portion end and the second bottom end, and wherein

the second inner wall has a curved surface connected to the second bottom end.

8. The permanent magnet synchronous electric motor according to claim 3, wherein

the recessed portion has

a first inner wall formed between the first recessed-portion end and the first bottom end and extending in the radial direction, and

a second inner wall formed between the second recessed-portion end and the second bottom end, and

the second inner wall has

a vertical surface connected to the second recessed-portion end and extending in the radial direction, and

an inclined surface connected to the vertical surface and the second bottom end and extending linearly to be inclined with respect to the vertical surface.

9. The permanent magnet synchronous electric motor according to claim 3, wherein

the recessed portion has

a first inner wall formed between the first recessed-portion end and the first bottom end and extending in the radial direction, and

a second inner wall formed between the second recessed-portion end and the second bottom end, and wherein

the second inner wall has a curved surface connected to the second bottom end.

10. The permanent magnet synchronous electric motor according to claim 1, wherein

the rotor includes

a first rotor portion, and

a second rotor portion adjacent to the first rotor portion in an axial direction in which the rotating shaft extends,

the plurality of permanent magnets include

a first magnet group disposed in the first rotor portion, and

a second magnet group disposed in the second rotor portion,

each of the plurality of permanent magnets constituting the first magnet group is a first permanent magnet,

each of the plurality of permanent magnets constituting the second magnet group is a second permanent magnet,

a circumferential center position of the stator-facing surface of the first permanent magnet and a circumferential center position of the stator-facing surface of the second permanent magnet coincide with each other in the axial direction,

the protruding portion of the rotor core has

> a first protruding portion disposed in the first rotor portion, and
> a second protruding portion disposed in the second rotor portion,

the first protruding portion is fitted into the recessed portion of the first permanent magnet,

the second protruding portion is fitted into the recessed portion of the second permanent magnet, and

the second protruding portion is displaced at a skew angle with respect to the first protruding portion in the circumferential direction.

11. The permanent magnet synchronous electric motor according to claim 1, wherein

the rotor includes

> a first rotor portion, and
> a second rotor portion adjacent to the first rotor portion in an axial direction in which the rotating shaft extends,

the plurality of permanent magnets include

> a first magnet group disposed in the first rotor portion, and
> a second magnet group disposed in the second rotor portion,

each of the plurality of permanent magnets constituting the first magnet group is a first permanent magnet,

each of the plurality of permanent magnets constituting the second magnet group is a second permanent magnet,

a circumferential center position of the stator-facing surface of the first permanent magnet and a circumferential center position of the stator-facing surface of the second permanent magnet do not coincide with each other in the axial direction,

the protruding portion of the rotor core extends continuously from the first rotor portion to the second rotor portion,

the protruding portion is fitted into the recessed portion of the first permanent magnet and the recessed portion of the second permanent magnet, and

a circumferential center position of the stator-facing surface of the first permanent magnet is displaced at a skew angle with respect to a circumferential center position of the stator-facing surface of the second permanent magnet in the circumferential direction.

FIG. 1A

FIG. 1B

FIG. 2A

FIG. 2B

# FIG. 3

# FIG. 4

## FIG. 5

## FIG. 6

## FIG. 7A

## FIG. 7B

## FIG. 8

## FIG. 9A

FIG. 9B

FIG. 10

FIG. 11A

## FIG. 11B

## FIG. 11C

## FIG. 12A

## FIG. 12B

## FIG. 13

## FIG. 14A

FIG. 14B

FIG. 14C

FIG. 15

## FIG. 16

## FIG. 17

FIG. 18

FIG. 19

## FIG. 20

## FIG. 21

## INTERNATIONAL SEARCH REPORT

International application No.

**PCT/JP2022/027691**

### A. CLASSIFICATION OF SUBJECT MATTER

*H02K 1/278*(2022.01)i; *H02K 1/2795*(2022.01)i
FI:  H02K1/278; H02K1/2795

According to International Patent Classification (IPC) or to both national classification and IPC

### B. FIELDS SEARCHED

Minimum documentation searched (classification system followed by classification symbols)

H02K1/278; H02K1/2795

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2022/113181 A1 (MITSUBISHI ELECTRIC CORP ) 02 June 2022 (2022-06-02) paragraphs [0009]-[0023], fig. 1-3 | 1-11 |
| A | WO 2012/105656 A1 (MITSUBISHI ELECTRIC CORP ) 09 August 2012 (2012-08-09) paragraph [0033], fig. 1-7 | 1-11 |
| A | JP 2017-158425 A (JOHNSON ELECTRIC SA) 07 September 2017 (2017-09-07) paragraph [0005], fig. 1-3 | 1-11 |
| A | JP 2008-148447 A (NSK LTD) 26 June 2008 (2008-06-26) paragraph [0009], fig. 1 | 1-11 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **29 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/027691**

| Patent document cited in search report | | | Publication date (day/month/year) | Patent family member(s) | Publication date (day/month/year) |
|---|---|---|---|---|---|
| WO | 2022/113181 | A1 | 02 June 2022 | (Family: none) | |
| WO | 2012/105656 | A1 | 09 August 2012 | (Family: none) | |
| JP | 2017-158425 | A | 07 September 2017 | US 2017/0222527 A1 paragraph [0006], fig. 1-3 DE 102017100889 A1 CN 107026523 A KR 10-2017-0091527 A | |
| JP | 2008-148447 | A | 26 June 2008 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009131070 A